# EUROPEAN PATENT APPLICATION

(11) **EP 1 277 814 A1**
(43) Date of publication of application: **22.01.2003**
(21) Application number: 01000310.1
(22) Date of filing: 20.07.2001
(51) Int. Cl.: C09D 167/00, C09D 161/00, C09D 167/06, C09D 161/06

(54) **Badge-free coating composition for metal substrates**

(71) Applicant: DSM N.V., 6411 TE Heerlen (NL)
(72) Inventor: Heyenk, Albert, 6971 JN Brummen (NL); Molhoek, Leendert Jan, 8072 HV Nunspeet (NL); Riggelen van, Wilhelmus Johannes Paulus St.M., 7608 AK Almelo (NL)
(74) Representative: van Tol-Koutstaal, Charlotte Adeliene

(57) **Abstract**

The invention relates to a substantially BADGE-free paint composition comprising
a) a polyester, based on at least 90 weight % aromatic acid monomers (based on the total weight of acid monomers used for producing the polyester);
b) a crosslinker being a phenolic based resin; and
c) an organic solvent or water.

The invention also relates to a substrate wholly or partly coated with a substantially BADGE-free coating composition according to the invention. The invention further relates to a method for further processing a substrate coated with a coating composition.

## Description

The present invention relates to a substantially bisphenol A diglycidyl ether (BADGE)-free coating composition suitable for application on metal substrates. It is especially suitable for the coating of metal containers and even more suitable for metal food containers both on the outside as well as on the inside of the container. The invention also relates to a substrate wholly or partly coated with a substantially BADGE-free coating composition according to the invention. The invention further relates to a method for further processing a substrate coated with a coating composition.

A coating composition for use on the inside of a metal food container must be approved for direct food contact. A fundamental function of a inside coating of a metal food container is to protect the packed product against influences from the environment and to maintain its nutritional value, texture, colour and/or flavour when purchased and used by the consumer. To meet these requirements, the coating should be free of any material which might migrate into the packed product. Also, the packed product itself can be very aggressive to both the coating inside the container and the metal surface, for example due to high acidity of the packed product. The ingredients in the container should not make contact with the metal surface. Therefore the coating should maintain its integrity over the product's recommended shelf life. Furthermore the coating should have enough flexibility for the metal substrate to be processed further into a container after being coated without damaging the coating. On the whole, current commercial coating compositions for metal food containers, have met all these performance criteria.

However, many current commercial coating compositions comprise epoxy resins which are manufactured from bisphenol A (BPA) and epichlorohydrin and can result in a coating which contains some residual amount of bisphenol A diglycidyl ether (BADGE). BPA is known for its influence on the endocrine system, and BADGE possibly has a carcinogenic effect. The level of residual BADGE remaining in the final coating, potentially available to migrate into food, is determined by a multiplicity of factors, for example the type of epoxy resins used, coating composition, film weight, curing conditions, metal container type and size, nature of the packed product and/or post processing of the metal container once filled. Recent investigations into the migration of BADGE into food from such coatings, have shown that possibly even a residual level of BADGE can migrate into the packed product. Fat-containing products appear particularly to be affected. Consumers of the BADGE-containing packed products will be exposed to a certain amount of BADGE. Therefore the industry has reviewed the use of BADGE-containing materials in such coatings. As a result some substantially BADGE-free coatings have been developed.

WO 00/55265, for example, discloses a substantially BADGE-free coating based on a medium molecular weight polyester resin, a resol resin and a solvent component. The coating composition according to the prior art, however results in a coating with a limited chemical resistance, rendering the coating unable to withstand the corrosive effects of for example acidic substances. Furthermore the coating composition has a limited stability and is not suitable as a one-pack (1 K) system.

It is the object of the present invention to provide a substantially BADGE-free coating composition which results in a coating with a better resistance to chemicals and aggressive ingredients in food.

This object is reached by a substantially bisphenol A diglycidyl ether (BADGE)-free coating composition comprising:
a) a polyester, based on at least 80 weight % aromatic acid monomers (based on the total weight of acid monomers used for producing the polyester),
b) a phenolic based crosslinker, and
c) an organic solvent or water.

The coating composition according to the invention results after curing in a substantially BADGE-free coating with good resistance to chemicals and aggressive ingredients in food.

Substantially BADGE-free is here and hereafter defined as a coating composition resulting in a coating from which less than 1 mg BADGE/kg packed product migrates into the food. Migration of BADGE into food or food simulants can be measured according to the method described by The Food Standards Agency UK, number 9/00, November 2000. Preferably less than 20 µg BADGE/kg packed product migrates into the food. Most preferably the coating is completely BADGE-free, so that no BADGE is present to migrate into the packed product and the consumer is not exposed to any BADGE-containing products.

An additional advantage is that the substantially BADGE-free coating composition results in a coating from which less than 3 mg BPA/kg packed product migrates into the packed product. Migration of BPA into food or food simulants can be measured according to the method described by The Food Standards Agency UK, number 13/01, April 2001. Preferably the BADGE-free coating composition results in a coating from which less than 50 µg BPA /kg packed product migrates into the packed product. Most preferably the coating composition is completely BPA-free, so that no BPA is present to migrate into the packed product and the costumer is not exposed to any BPA containing products.

Additional advantages of the substantially BADGE-free coating composition according to the invention are that the coating composition can be used in a one-pack (1 K) system and that the coating composition has an increased stability upon storage with respect to the substantially BADGE-free coating compositions according to the prior art.

More additional advantages can be obtained with the substantially BADGE-free coating composition according to the invention, for example by meeting desired requirements relating to, for example, sterilisation and pasteurisation properties of the coating, flexibility of the coating, the approval for food applications (according to FDA paragraph 175300), and/or a good adhesion of the coating composition and the coating on the substrate.

Polyesters suitable for the substantially BADGE-free coating composition of the invention can be made by several methods for preparing polyesters known to the person skilled in the art. Methods for preparing polyesters are for example described in Brock et.al. 'European Coatings Handbook', 2000, Vincentz Verlag, pg 53-58. For example, the polyesters can be produced by an esterification reaction between poly-functional alcohols and poly-functional acids and/or poly-functional acid anhydrides. The type of monomers to be used to prepare the polyesters can be selected by the person skilled in the art depending on the desired use.

The polyesters suitable for the substantially BADGE-free coating composition of the invention, must be based on at least 80 weight % of aromatic acids and/or aromatic acid anhydrides (based on the total weight of acid and acid anhydride monomers used). Preferably, more than 90 weight % aromatic acids and/or aromatic acid anhydrides is used, more preferably more than 95 weight %, even more preferably between 97 and 100 weight % and most preferably 100 weight %.

The use of an increasing amount of aromatic acid monomers and/or aromatic acid anhydride monomers in the polyester of the coating composition surprisingly gives the resulting coating a higher stability in comparison with a coating based on a coating composition comprising a polyester based on a lower amount of aromatic acid monomers and/or aromatic acid anhydride monomers.

Suitable examples of poly-functional acids and/or poly-functional acid anhydrides for preparing the polyesters can include aromatic acid monomers and/or aromatic acid anhydride monomers like, for example isophthalic acid, terephthalic acid (dimethyl terephthalate ester), 5-6-butylisophthalic acid, phthalic anhydride trimellitic anhydride, pyromellitic anhydride. In addition to the aromatic acid monomers other poly-functional acid monomers can be used, for example, adipic acid, sebacic acid, hexahydroterephthalic acid (CHDA), decane dicarboxylic acid, and/or dimerised poly-functional fatty acids or poly-functional acid anhydrides for example, tetrahydrophthalic anhydride, succinic anhydride, maleic anhydride, and/or hexahydrophthalic anhydride.

Suitable poly-functional alcohols for preparing the polyesters include ethylene glycol, diethylene glycol, butanediol (1,4), hexanediol (1,6), 2,2-dimethyl-1,3-propanediol, 2-methyl-1,3-propanediol, 1,3-butanediol, 1,3-propanediol, 1,2-propanediol, 2-ethyl-2-butyl-1,3-propanediol, trimethylpentanediol, hydroxypivalic neopentyl glycol ester, tricyclodecane dimethanol, cyclohexane dimethanol, trimethylolpropane and/or pentaerythritol.

Preferably a certain amount of branching agent is added. A branching agent is an at least tri-functional monomer. The presence of the branching agent results in a non-linear polyester. Preferably the polyester used in the coating composition according to the invention is non-linear. The branching has a beneficial effect on the reactivity between the polyester and the crosslinking agent of the coating composition during curing. Examples of branching agents are trimethylol propane (TMP), trimellitic anhydride (TMA) and/or pentaerythritol. The person skilled in the art can easily experimentally determine the suitable amount of branching agent desired.

The esterification reaction preferably takes place under a nitrogen atmosphere at temperatures between 150°C and 280°C. During the reaction the released water can be removed through distillation and the desired degree of esterification can be achieved by applying azeotropic distillation and/or vacuum in the last phase.

Catalysts can be added to the reaction mixture. The choice of the catalyst present during esterification can influence the properties of the final polyester and thereby the properties of the coating composition and the coating, for example stability of the coating composition, chemical resistance of the coating and/or flexibility of the coating. Examples of suitable catalysts are dibutyl tin oxide, tin chloride, butyl chlorotin dihydroxide (FASCAT™), tetrabutyoxytitanate and/or phosphorous acid.

Antioxidants, for example phosphorous acid, triphenylphosphite and/or trinonylphenylphosphite may be added as additives to the reaction mixture.

The polyester may contain functional groups. Examples of these functional groups are anhydride groups, carboxyl groups, hydroxyl groups, aceto acetonate groups, acryl amide groups and combinations thereof.

The acid value of the polyester is preferably lower than 25, more preferably lower than 10 mg KOH/gram resin, and most preferably between 3 and 0 mg KOH/gram resin.

The desired use and properties of the final coating can determine the choice of polyester via its glass transition temperature (Tg). The (Tg) of a polyester is most commonly determined by differential scanning calorimetry (DSC). The Tg is the temperature at which there is a 'sudden' increase in the specific heat (Cp) of the polyester resin. This is manifested by a shift in the baseline of the DSC curve. The International Confederation of Thermal Analysis proposes an evaluation procedure to be used to determine the Tg. According to this procedure two regression lines R1 and R2 are applied to the DSC curve: the regression line before the event (R1) and the regression line at the inflection point (R2). These two lines define the glass transition temperature (Tg) as the intersection between R1 and R2. It should be noted that the values for the Tg obtained by DSC are dependent on the heating rate chosen during the experiment. Generally the heating rate used by DSC measurements is 5 °C/min. The Tg of the polyester in the coating composition according to the invention is preferably equal to or lower than 43 °C, more preferably equal to or lower than 33 °C and most preferably equal to or lower than 23 °C.

According to another embodiment of the invention the glass transition temperature (Tg) of the polyester should be at most 3 °C above the temperature at which a substrate coated with the coating composition is further processed (Tp). It has surprisingly been found that whenever the Tg of the polyester is more than 3 °C above the Tp the porosity of the coating becomes too high and micro cracks can develop in the coating during further processing. This is not desirable because the coating is generally not able to prevent the packed product to reach the metal substrate underneath the coating. Therefore, to retain a lower porosity of the coating when the coated substrate is further processed at an ambient temperature of 20 °C, the Tg of the polyester used in the coating composition should preferably be equal or lower than 23 °C. When the coated substrate is further processed at 30 °C, the Tg of the polyester used in the coating composition should preferably be equal to or lower than 33 °C.

The molecular weight (Mw) of the polyester is preferably higher than 10000. Preferably, the polyester is a high molecular weight polyester, with generally a Mw of higher than 20000 and even more preferably higher than 40000. It has surprisingly been found that a higher molecular weight has for instance a beneficial effect on the chemical resistance and the flexibility of the resulting coating.

The binder composition of a coating composition is here and hereafter defined as the combination of resin and crosslinker present in the coating composition.

The term resin, which can exist of one or more different polymers, is here and hereafter defined as the total amount of polymer in the binder composition. The polyester suitable for the coating composition of the invention therefore can also be only a part of the resin of the binder composition.

According to a further embodiment of the invention also another polymer can be added to the binder composition. Preferably the amount of this other polymer is lower than 10 weight % based on the total amount of resin, more preferably lower than 5 weight %, and most preferably between 3 and 0 weight %. This other polymer can contain aliphatic acid units. Preferably the total amount of aliphatic acid units in the resin is lower than 10% of the total acid groups present in the resin. More preferably the total amount of aliphatic acid units present in the resin is lower than 5% and most preferably the total amount of aliphatic acid units present in the resin is 0%.

The polyesters suitable for the coating composition of the invention have to be cured with a crosslinker or a mixture of crosslinkers. The crosslinker or mixture of crosslinkers may be selected depending on the desired use. The person skilled in the art can easily determine the (mixture of) crosslinker(s) most suitable for the desired use.

The coating composition has to comprise at least one phenolic based crosslinker. Suitable phenolic based crosslinkers are, for example, curable unplasticized phenolic resin (Uravar SFC 112™), n-butylated phenolic resin (Uravar FB209 57 BT™), non-etherified phenolic resin (Uravar FB 190™, SFC 138™) and/or comparative products, for example Bakelite LB 7700™ and/or SFC 110™.

Optionally, another crosslinker or a mixture of other crosslinkers may be added to the coating composition in combination with a phenolic based crosslinker or a mixture of phenolic based crosslinkers. Preferably the other crosslinker comprises at least an amino resin crosslinker. The amount of the other crosslinker used, depends on the use and desired colour of the final coating. Generally at least 5 weight % phenolic based crosslinker is used (based on the total weight of crosslinker). Less than this amount of phenolic based crosslinker would generally result in a coating with a low chemical resistance. Increasing the amount of phenolic based crosslinker surprisingly increases the chemical resistance of the final coating.

For a non-white coating this amount can easily be increased. For this non-white type of coating, preferably at least 60 wt % phenolic based crosslinker, more preferably at least 80 wt% phenolic based crosslinker and most preferably at least 95 wt% of phenolic based crosslinker (based on the total weight of crosslinker) is used.

For decorative reasons also white coatings have been developed. Use of the coating composition according to the invention for a white coating, for example an interior white can coating, is possible. The amount of phenolic based crosslinkers should generally be lower than for a non white coating, because the presence of phenolic based crosslinkers in the coating composition can cause undesirable yellowing of the white coating. The person skilled in the art can easily determine what amount of phenolic based crosslinkers is suitable to use while preventing unacceptable yellowing of the white coating.

The weight ratio resin: crosslinker is generally between 95:5 and 50:50. The ratio may be selected depending on the desired use.

Preferably, the composition comprises a catalyst for curing the polyester and the crosslinker. Examples of suitable catalysts are Additol XK406™, Nacure 2500™, phosphoric acid, dinonylnaphtalene disulfonic acid, para toluene sulphonic acid. The catalyst may generally be applied in amounts between 0.01% and 10% by weight and preferably in amounts between 0.2 and 5% by weight (relative to the binder composition). The catalyst may be selected depending on the desired use. The person skilled in the art can easily determine the catalyst most suitable for the desired use.

Suitable diluents and/or solvents for the polyester and/or the crosslinker include but are not limited to ketones, esters, ethers, alcohols, and/or hydrocarbons. Also mixtures of different diluents and/or solvents can be used. One may use a solvent for either the polyester or the crosslinker, or both. It is preferred that both components be dispersed or dissolved in an appropriate solvent for ease of application and to ensure that the composition is homogeneously blended. Preferably, the diluents and/or solvents used are compatible with each other and provide adequate dispersion and/or dissolution of the components in the coating composition. The selection of the diluents and/or solvents depends upon the viscosity of the blend of the polyester and the crosslinker without a diluent or solvent and the desired viscosity and solids content of the coating composition. The person skilled in the art can easily determine what viscosity is desired for the specific use. The amount of diluents and/or solvents generally ranges between 5 and 90% (based on the total weight of the coating composition).

Preferably the diluents and/or solvents are chosen from the group including hydrocarbons, especially aromatic hydrocarbons; ethers, especially glycoethers and other equivalent ethers; and various esters, well-known to the person skilled in the art. Examples of suitable diluents and/or solvents are for example aromatic hydrocarbon compounds (for example the 'Solvesso' types), N-methylpyrolidone, xylene, propylene glycol monomethylether, methylpropylene glycol acetate, butyl acetate, dibasic ester, isophoron, ethyl ethoxypropionate, ethylene-propylene glycol acetate and/or butyl glycol.

If desired, the polyester and/or the crosslinker, if amenable to doing so, may be subject to a precondensation step to improve their compatibility and reduce the porosity of the final coating. This may be accomplished by mixing the polyester and/or the crosslinker with a suitable solvent and/or diluent and a catalyst, for example an acid catalyst and allowing the polyester and the crosslinker to partially react or prepolymerize before use. In doing so, however one needs to ensure that the solids content of the coating is kept within the desired range and that other desired characteristics of the coating are not adversely affected.

The coating composition according to the invention may be used as a pigmented composition as well as an unpigmented composition. The person skilled in the art knows what kind of pigments are available and can easily determine the pigment to use for the desired effect.

If so desired usual additives, for example fillers, stabilisers, dispersing agents, waxes, flow-promoting agents and defoaming agents may be added to the coating composition according to the invention.

To influence certain properties of the coating, for example adhesion of the coating to the substrate or chemical resistance, it is also possible to add other coating components to the coating composition according to the invention. Examples of other coating components are other non-epoxy based coating components (for example PVC organosols) and/or high molecular weight epoxy resins (for example Epikote 1007™ or Epikote 1009™, both available from Shell). These high molecular weight epoxy resins do have BADGE-units before curing, but they will either react with the crosslinker during the curing process, thereby becoming chemically bound into the cured film, or volatize on stoving. No detectable level of BADGE units which can migrate to the packed product, remains in these coatings when properly cured.

The invention also relates to a substrate wholly or partly coated with a substantially BADGE-free coating composition according to the invention. The coating composition according to the invention can be used in several coating applications. Examples of suitable applications are foil coating applications, can coating applications, and coil coating applications. For each application different requirements are to be met by the coating composition as is well-known to the person skilled in the art.

A can coating may be obtained via a process as described in for example 'Organic Coatings - Science and Technology, Volume 2: Applications, Properties and Performance' by Z.W. Wicks et al. (Wiley-lnterscience, 1994, pp. 284-290). The curing conditions and additives may be selected to depend on the desired application and the nature and thickness of the substrate. The curing time will generally range between a few seconds and tens of minutes at temperatures between about 150 °C and about 250 °C. Suitable substrates include for example steel, tin-plated steel (ETP, Electrolytic Tin Plate), chromium-plated steel (ECCS, Electrolytic Chromium-Chromium Oxide Steel) and aluminium. The coating according to the invention is suitable for use as an interior and as an exterior coating of a metal container and may be used for example as a coating for food cans, beer cans, cans for other beverages ('2 and 3 piece'), spray cans, can ends, caps, tops, lids, tubes, drums, cigar boxes and fish cans (the so-called 'drawn-redrawn (DRD)', 'draw-wall ironed (DWI)' cans).

The coating composition according to the invention also yields a good result in a coil coating application. This coating application differs with respect to the desired layer thickness and with respect to the curing conditions from a can coating application. The coil coating may be obtained for example via known processes as described for example in 'Coil Coatings' by Joseph E. Gaske (Federation of Societies for Coatings Technology, February 1987, pp. 7-19). The curing conditions and additives may be chosen to depend on the desired peak metal temperature (PMT) and the nature and thickness of the substrate. The curing time will generally be between about 20 and about 70 seconds at temperatures between about 250°C and about 400°C and a PMT between 204°C and 249°C. Suitable substrates include for example steel, tin-plated steel (ETP, Electrolytic Tin Plate), chromium-plated steel (ECCS, Electrolytic Chromium-Chromium Oxide Steel) and aluminium.

The invention further relates to a method for further processing a substrate coated with a coating composition. After applying a coating composition to a substrate the composition is cured resulting in a coating. Generally, the substrate is further processed to be formed into a desired shape. This is performed at a certain temperature (Tp). During this processing the coated substrate is exposed to all kinds of stresses, which in certain cases can lead to a too high porosity of the coating and micro cracks can develop in the coating. This is not desirable because the coating will then be not able to prevent the packed product to reach the metal substrate underneath the coating. Surprisingly it has been found that only when the temperature at which the substrate is further processed (Tp) is at most 3 °C below the Tg of the polymer in the coating composition, the porosity of the coating after processing is acceptable. Generally a Kuhnke porosity is acceptable of 10 mA, more preferably lower than 3 mA, and most preferably between 1 and 0 mA.

The used coating composition can generally comprise any desired components. Preferably the polymer is a polyester. More preferably the used coating composition is a substantially BADGE-free coating composition. Most preferably the used coating composition comprises is a substantially BADGE-free coating composition according to the invention, as described before.

Hereafter the invention will be elucidated with the following nonlimiting examples.

### Example I

893 parts by weight of diethylene glycol, 22 parts by weight of trimethylolpropane, 692 parts by weight of isophthalic acid, 692 parts by weight of terephthalic acid, 2 parts by weight of trinonylphenylphosphite and 1 parts by weight of dibutyltinoxide were heated under a nitrogen atmosphere in a glass reaction flask with a mechanical stirrer, a thermometer and a still with a Vigreux column. The reaction water formed was removed through distillation until an acid number of 1.3 mg of KOH/gram was reached. After cooling to 170°C, 1000 parts by weight of Solvesso 150™ and 1000 parts by weight of dibasic ester were added to obtain a 50% dry solids content.

The viscosity measured in a Phsica Viscolab LC3 at 23 °C was 116 dPa.s.

The molecular weight (Mw) was 83000 gram/mol, (determined with the aid of gel permeation chromatography using a polystyrene standard).

The glass transition temperature of the polyester was 22°C, (determined with a Mettler TA 3000 DSC; 5°C/min.).

### Example II

359 parts by weight of 2,2-dimethyl-1,3-propanediol, 531 parts by weight of diethyleneglycol, 22 parts by weight of trimethylolpropane, 694 parts by weight of isophthalic acid, 694 parts by weight of terephthalic acid, 2 parts by weight of trinonylphenylphosphite and 1 parts by weight of dibutyltinoxide were heated under a nitrogen atmosphere in a glass reaction flask with a mechanical stirrer, a thermometer and a still with a Vigreux column. The reaction water formed was removed through distillation until an acid number of 1.7 mg of KOH/gram was reached. After cooling to 170°C, 1500 parts by weight of Solvesso 150™ and 1500 parts by weight of dibasic ester were added to obtain a 40% dry solids content.

The viscosity measured in a Physica Viscolab LC3 at 23°C was 44 dPa.s.

The molecular weight (Mw) was 92000 gram/mol, (determined with the aid of gel permeation chromatography using a polystyrene standard).

The glass transition temperature of the polyester was 36°C, (determined with a Mettler TA 3000 DSC; 5°C/min.).

### Comparative Example A

504 parts by weight of 2,2-dimethyl-1,3-propanediol, 159 parts by weight of ethyleneglycol, 97 parts by weight of 1,2-propanediol, 118 parts by weight of trimethylolpropane, 421 parts by weight of adipic acid, 410 parts by weight of isophthalic acid, 618 parts by weight of terephthalic acid, 2 parts by weight of trinonylphenylphosphite and 1 parts by weight of dibutyltinoxide were heated under a nitrogen atmosphere in a glass reaction flask with a mechanical stirrer, a thermometer and a still with a Vigreux column. The reaction water formed was removed through distillation until an acid number of 2.8 mg of KOH/gram was reached. After cooling to 170°C, 1000 parts by weight of Solvesso 150™ and 1000 parts by weight of dibasic ester were added to obtain a 50% dry solids content.

The viscosity measured in a Physica Viscolab LC3 at 23°C was 22 dPa.s.

The molecular weight (Mw) was 42000 gram/mol, (determined with the aid of gel permeation chromatography using a polystyrene standard).

The glass transition temperature of the polyester was 19°C, (determined with a Mettler TA 3000 DSC; 5°C/min.).

### Experiments I & II and Comparative Experiment A

The resin according to Example I was mixed with a catalyst (Additol XK 406 of Hoechst), crosslinkers (SFC 112 of Schenectady, Uravar FB209™), dibasic ester, and thinner (a mixture of 334 parts by weight Dowanol PM, 65 parts by weight butylacetate, 460 parts by weight Solvesso 150 and 140 parts by weight butylglycol) as indicated in Table I, resulting in a BADGE-free coating composition. The resins according to Example II and Comparative Example A were treated in an analogous manner as indicated in Table I. These BADGE-free coating compositions were cured according to the conditions as indicated in Table I and subsequently the following tests were performed on the coatings, the results thereof also indicated in Table I.
1) The solvent resistance test is done by counting the number of dubble rubs (forwards and back) necessary to remove the coating down to the metal. Rubbing is carried out with a piece of cotton wool-soaked in a solvent (methyl ethyl ketone). The result is reported as a number of dubble rubs from 0-100 (numbers above 100 are all reported as > 100).
2) The DSM cup flexibility evaluates the ability of the coating to withstand stamping operations that form a coated flat panel into a DSM R cup. A DSM R cup is stamped after ageing of the panels for 5 days at room temperature. The judgement of the visual inspection on coating defects is as follows:
   1 = very bad
   2 = bad
   3 = moderate
   4 = good
   5 = very good
   Judgement is done before and after sterilisation.
3) The Erichsen flexibility test evaluates the flexibility of a coating by means of a slow deformation. By means of a slow drawing of a cup from a flat sheet an indication is obtained on how the coating will perform during forming operations in practice. Erichsen cups are drawn after ageing of the panels for 5 days at room temperature.
   The judgement is as follows:
   1. very bad = total delamination
   2. bad = delamination till the top
   3. moderate = half of the drawing cup is delaminated
   4. good = slight delamination only on the edges max. 2mm
   5. very good = no coating defects.
   Judgement is done before and after sterilisation.
4) The wedge bend test is conducted to determine the flexibility, this is done after ageing of the panels for 5 days at room temperature. A cooled panel (100 mm by 40 mm) is bent over a 6 mm cylindrical mandrel. The folded panel thus produced is then impacted (4,5 Nm) in a device (the wedgebend tester) to form a wedge-shaped contour, flat at one end and 6 mm diameter at the other end. This test piece is then immersed in acidified 3% hydrochloric acid saturated copper sulphate solution for 4 minutes in order to stain any cracks in the coating. The width in millimeters of the crackfree surface is measured. The percentage crackfree surface is recorded. The higher the % of crackfree surface, the higher the flexibility.
5) Sterilisation test
   Formed cans are placed into a sterilizer at a temperature of 129°C for 1 hour in the presence of the medium as indicated in table I and then withdrawn and observed. Absorption of the medium and blister formation were evaluated. For the judgement we refer to 2). The sterilisation test is a measure for chemical resistance, or resistance to the aggressive ingredients present in food.
6) Kuhnke Porosity
   Detection of pores and micro-cracks in coated can ends. The amount of electrical current flowing is inverted related to the insulating capacity of a coating. The more pores the more current is flowing.
   Can ends are stamped out at room temperature (20 °C) of a flat panel which has aged at room temperature (20 °C) for 5 days. The porosity is measured by means of a Kuhnke enamel rater MK 4-6.3-10. Standard settings of the instrument are: 6.4 V for 4 seconds. A 1% NaCI solution is used as electrolyte. The electrical current flowing (in mA) is recorded.
7) Viscosity retention
   After preparation of the coating composition the viscosity is measured. The coating composition is subsequently stored in a closed jar at 40°C. After a certain period the viscosity is measured again. The viscosity retention is recorded as (initial viscosity/viscosity after ageing)*100%.

**Table I**

| | Experiment I | Experiment II | Comparative Experiment A |
|---|---|---|---|
| Polyester Exp.1 | 100 | | |
| Polyester Exp. A | | | 100 |
| Polyester Exp. B | | 125 | |
| SFC 112™ | 25.6 | 25.6 | 25.6 |
| Uravar FB209™ | 5.8 | 5.8 | 5.8 |
| Additol XK 406™ | 0.7 | 0.7 | 0.7 |
| Dibasic ester | 24 | 24 | 24 |
| Thinner | 22 | 22 | 22 |
| Cure time | 12 min. | 12 min. | 12 min. |
| Cure temperature | 205°C | 205°C | 205°C |
| Substrate | ETP | ETP | ETP |
| Solvent resistance¹⁾ | 30 | 30 | 40 |
| Stampability DSM cup²⁾ | 5/5 | 5/5 | 5/5 |
| Erichsen first cupping³⁾ | 5/5 | 5/5 | 5/5 |
| Erichsen second cupping³⁾ | 5/5 | 5/5 | 5/5 |
| Wedgebend % ⁴⁾ | 100 | 90 | 80 |

| Sterilisation⁵⁾: | | | |
|---|---|---|---|
| Tapwater (gas/liquid phase) | 5/5 | 5/5 | 5/5 |
| 2% Acetic acid (g/l) | 5/5 | 5/5 | 4/4 |
| 2% Citric acid (g/l) | 5/4 | 5/4 | 4/3 |
| 2% Lactic acid (g/l) | 5/5 | 5/5 | 4/4 |
| 3% NaCI (g/l) | 5/4 | 5/4 | 4/3 |
| Kuhnke Porosity (mA) ⁶⁾ | 0.8 | > 200 | 6.9 |
| Viscosity retention after 2 month at 40°C ⁷⁾ | 100% | 100% | 30% |

Comparing the sterilisation results of Experiments I and II, both containing a polyester only based on aromatic acids, to the results of Comparative Experiment A, that contains a polyester based less than 80 weight % aromatic acids, shows that the coatings of Experiments I and II result in a better resistance to anything other than tapwater. Also the stability of the coating compositions of Experiment I & II is better than the stability of the coating composition according to comparative Experiment A.

## Claims

1. A substantially bisphenol A diglycidyl ether (BADGE)-free coating composition comprising
a. a polyester, based on at least 80 weight % aromatic acid monomers (based on the total weight of acid monomers used for producing the polyester);
b. a phenolic based crosslinker; and
c. an organic solvent or water.

2. A coating composition according to claim 1, **characterised in that** the glass transition temperature (Tg) of the polyester is at most 3 °C above the temperature (Tp) at which a substrate coated with the coating composition is further processed.

3. A coating composition according to claim 1, **characterised in that** the glass transition temperature (Tg) of the polyester is equal to or lower than 23 °C.

4. A coating composition according to any one of claims 1-3, **characterised in that** the polyester has a molecular weight (Mw) higher than 20000.

5. A coating composition according to any one of claims 1-4, **characterised in that** the polyester is non-linear.

6. A coating composition according to any one of claims 1-5, **characterised in that** the coating composition also comprises pigments and/or usual additives.

7. A coating composition according to any one of claims 1-6, **characterised in that** all the components in the coating composition are FDA approved (according to paragraph 175300).

8. An entirely or partly coated substrate, wherein the coating is obtained from a composition according to any one of Claims 1-7.

9. A method for further processing a substrate coated with a coating composition **characterised in that** the temperature at which the substrate is further processed (Tp) is at most 3 °C below the Tg of the polymer in the coating composition.

10. A method for further processing a substrate coated with a coating composition according to claim 9, **characterised in that** the coating composition is a coating composition according to any one of claims 1, 3-7.
